# DEMANDE DE BREVET EUROPEEN

(11) **EP 0 566 813 A1**
(43) Date de publication de la demande: **27.10.1993**
(21) Numéro de dépôt: 92830469.0
(22) Date de dépôt: 07.09.1992
(51) Int. Cl.: F16L 55/027, E03C 1/02

(54) **Tube flexible avec réducteur de débit pour des installations sanitaires hydrauliques**

(30) Priorité: 23.04.1992 FR 9205018
(71) Demandeur: NIKLES S.a.r.l., F-68440 Habsheim (FR)
(72) Inventeur: Nikles, Gerhard, F-68440 Habsheim (FR)
(74) Mandataire: Manzoni, Alessandro

(57) **Abrégé**

L'invention concerne un tube flexible avec réducteur de débit pour des installations sanitaires hydrauliques.

Ce tube flexible pour des installations sanitaires hydrauliques comprend des raccords terminaux femelle et/ou mâle, et contient un limitateur de débit (14) dans au moins un de ses raccords terminaux (13). Les structure, forme et matériau du limitateur de débit (14) peuvent être variables et ledit limitateur de débit (14) est maintenu en fonctionnement par le simple fait de la liaison du tube au robinet et au réseau de distribution d'eau.

## Description

La présente invention concerne, en général, le secteur de la robinetterie pour des installations sanitaires hydrauliques et, plus particulièrement, les tubes flexibles utilisés pour relier les robinets de commande du débit d'eau au réseau de distribution d'eau.

Ces tubes flexibles présentent habituellement des raccords terminaux mâle ou femelle grâce auxquels ils sont reliés d'une part au réseau de distribution d'eau et d'autre part à l'arrivée du robinet d'interception, qu'il s'agisse d'un robinet normal ou d'un robinet mélangeur à commande unique.

D'autre part, on connaît les exigences d'ordre tant écologique qu'économique visant à réduire le débit d'eau à travers un robinet pour éviter le gaspillage et économiser l'énergie, pour l'eau chaude et l'eau chaude/froide mélangée. Actuellement, la limitation du débit est réalisée au niveau des robinets ou mélangeurs grâce à des dispositifs divers qui finissent cependant par agir sur la structure de ces robinets ou mélangeurs, en en compliquant l'exécution, l'assemblage et le fonctionnement. La présente invention envisage donc de remédier à ces inconvénients en réalisant la réduction du débit d'eau au niveau des tubes flexibles reliant un robinet ou mélangeur au réseau de distribution d'eau, et particulièrement au niveau d'au moins un des raccords terminaux mâle ou femelle de ces tubes, par des moyens limitateurs particulièrement simples, efficaces et économiques.

Dans ce but, la présente invention propose un tube flexible pour l'usage mentionné ci-dessus, caractérisé en ce qu'il incorpore un limitateur de débit dans au moins un de ses raccords terminaux, la structure, la forme et le matériau utilisés pour le limitateur de débit pouvant être variables, et en ce que ce limitateur est maintenu en fonctionnement du fait du raccord du tube au robinet et au réseau de distribution d'eau.

Le limitateur pourra être appliqué en entrée comme en sortie du tube flexible, en tenant compte de la direction du flux de l'eau, et aura pour fonction de limiter le diamètre de transit de l'eau par rapport à la section propre du conduit défini par le tube.

On trouvera une description plus détaillée de l'invention dans la description ci-dessous, en se référant aux dessins joints, où :
La figure 1 illustre un exemple de tube flexible avec des raccords terminaux mâle et femelle et avec un régulateur de débit, séparé, placé du côté du raccord femelle ;
La figure 2 illustre une partie agrandie et en coupe de l'extrémité femelle du tube flexible de la figure 1, avec un régulateur de débit inséré dans ce même raccord ;
La figure 3 illustre une vue analogue à celle de la figure 1, mais pour un tube flexible avec raccord terminal mâle ;
La figure 4 illustre une partie agrandie et en coupe d'un raccord terminal mâle comprenant le régulateur de débit ; et
La figure 5 illustre un régulateur en détail et partiellement en coupe.

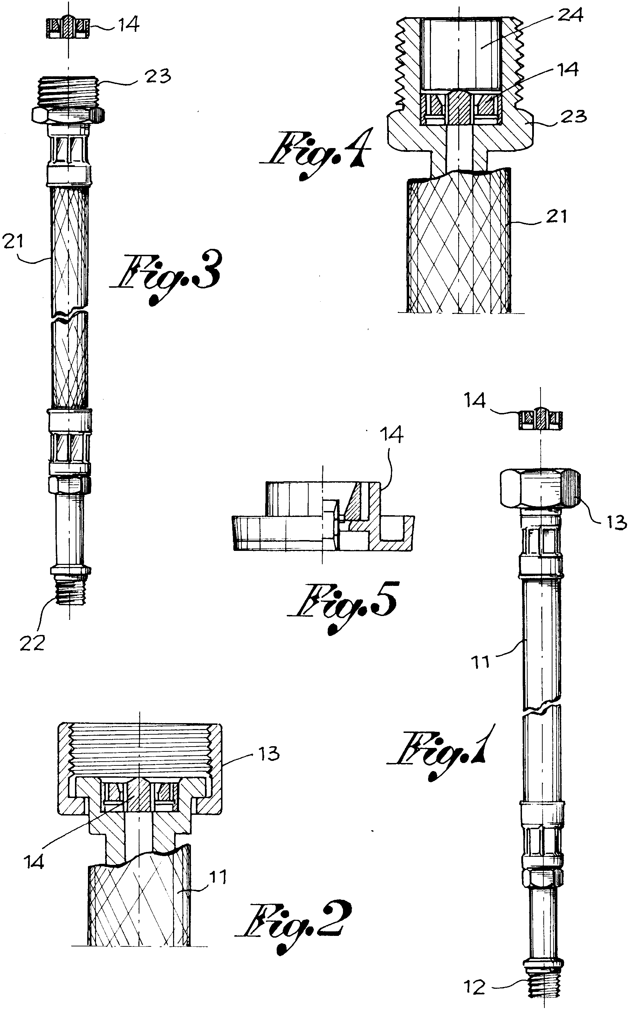

Les figures 1 et 3 illustrent deux exemples de tubes flexibles 11 et 21, respectivement, pouvant être utilisés dans des installations sanitaires hydrauliques pour relier un robinet ou mélangeur au réseau de distribution d'eau.

Le tube flexible 11 de la figure 1 est du type portant deux raccords terminaux, un raccord mâle 12 et un raccord femelle 13. Le tube flexible 21 illustré dans la figure 3 est du type portant deux raccords terminaux mâles 22, 23. La longueur des tubes 11 et 21 et les dimensions des raccords peuvent être les longueurs et dimensions habituelles et peuvent donc correspondre aux dimensions et longueurs requises.

Dans tous les cas, un limitateur de portée 14 est inséré dans au moins un des raccords d'extrémité de chaque tube flexible 11, 21. Ce limitateur de portée peut être constitué d'au moins un disque percé ou d'au moins une garniture déformable ou encore par une série de filtres ou de résilles ou par tout élément ou combinaison d'éléments adéquats permettant de définir dos passages ou lumières ayant, de manière générale, une section inférieure à celle du conduit défini par le raccord ou par le tube flexible.

Dans l'exemple illustré dans les figures 1 et 2, le limitateur de débit 14 est prévu et dimensionné pour être inséré dans le raccord femelle 13 du tube flexible 11.

Dans l'exemple illustré dans les figures 3 et 4, le limitateur de débit 14 est en revanche prévu et dimensionné pour être inséré dans le raccord mâle 23 du tube flexible 21.

Dans les deux cas, le limitateur de portée demeure logé dans le raccord du fait de l'application en fonctionnement du tube, et ceci sans qu'il soit besoin de recourir à des moyens particuliers et spécifiques. En outre, on pourra prévoir, en association avec le limitateur de débit, un clapet de non-retour 24 inséré lui-aussi dans un raccord terminal du tube (voir figure 4).

En substance, en choisissant de manière appropriée le limitateur de portée 14 et les lumières de passage de l'eau qui seront définies par celui-ci, il sera possible de réduire le débit de l'eau au robinet et donc, grâce à ceci, de le limiter à une valeur standard quelconque allant de 0,24 l/min à 12 l/min ou plus, en fonction des besoins. En outre, le système décrit offre un confort accru au niveau du robinet en soi ou de la soupape de mélange intégrée à ce dernier et surtout, comme on l'a déjà mentionné plus haut, il permet une économie d'eau et une meilleure qualité du mélange d'eau chaude et froide.

## Revendications

1. Tube flexible pour des installations sanitaires hydrauliques, servant en particulier à relier les robinets, mélangeurs ou non de commande du débit de l'eau au réseau de distribution d'eau et habituellement pourvu des raccords terminaux mâle et/ou femelle, caractérisé en ce qu'il comporte un limitateur de débit (14) dans au moins un de ses raccords terminaux (12, 13; 22, 23), les structure, forme et matériau dudit limitateur de débit (14) pouvant être variables, ledit limitateur de débit étant maintenu en fonctionnement du fait de la liaison du tube au robinet et au réseau de distribution d'eau.

2. Tube flexible selon la revendication 1, dans lequel ledit limitateur de débit (14) est formé par un disque percé au moins une garniture déformable, une série de filtres ou de résilles ou par des éléments ou combinaisons d'éléments pouvant définir des passages ou lumières de section totale déterminée.

3. Tube flexible selon les revendications 1 et 2, dans lequel ledit limitateur de portée (14) est placé dans le raccord d'entrée de l'eau dans le tube flexible, que ce raccord soit femelle ou mâle.

4. Tube flexible selon les revendications 1 et 2, dans lequel ledit limitateur de débit (14) est placé dans le raccord de sortie d'eau du tube flexible, que ce raccord soit mâle ou femelle.

5. Tube flexible selon l'une des revendications précédentes, dans lequel ledit limitateur de débit (14) est appliqué à un raccord en association avec un clapet de non-retour (24).
